# EUROPÄISCHE PATENTSCHRIFT

(11) **EP 2 410 148 B1**
(45) Veröffentlichungstag und Bekanntmachung des Hinweises auf die Patenterteilung: **21.05.2014**
(21) Anmeldenummer: 11168434.6
(22) Anmeldetag: 01.06.2011
(51) Int. Cl.: F01N 13/10

(54) **Abgasanlage**
Exhaust gas assembly
Dispositif d'échappement

(30) Priorität: 22.07.2010 DE 102010031855
(43) Veröffentlichungstag der Anmeldung: 25.01.2012
(73) Patentinhaber: Eberspächer Exhaust Technology GmbH & Co. KG, 66539 Neunkirchen (DE)
(72) Erfinder: Gaiser, Gerd, 72768 Reutlingen (DE)
(74) Vertreter: BRP Renaud & Partner

(56) Entgegenhaltungen:
- EP-A1- 0 216 729
- EP-A1- 0 867 605
- EP-A1- 2 009 132
- EP-A2- 0 261 050
- EP-A2- 1 507 072
- DE-A1- 10 244 798
- DE-A1-102007 026 123
- JP-A- 58 104 318
- US-A- 5 067 584

## Beschreibung

Die Erfindung betrifft eine Komponente einer Abgasanlage mit einem selbsttragenden Mantel, sowie eine Abgasanlage mit einem selbsttragenden Mantel, mit den Merkmalen des Oberbegriffs des Anspruchs 1. Des Weiteren ist ebenfalls Gegenstand der Erfindung ein Verfahren zur Herstellung einer derartigen Komponente.

Abgasanlagen für Brennkraftmaschinen, insbesondere in einem Kraftfahrzeug, sind heutzutage im Bereich des Mantels der jeweiligen Komponente aus massivem Material, wie z. B. Rohren, aufgebaut. Da die Verwendung solcher massiven Materialien im Mantelbereich der Abgasanlage zu einem hohen Gewicht führt, müssen sämtliche Anbindungsstellen der Abgasanlage an das Kraftfahrzeug dementsprechend dimensioniert sein. Zudem ist aufgrund der massiven Bauweise, insbesondere des Mantelbereichs, eine Herstellung nur durch hohen Materialverbrauch und hohe Kosten möglich. Auch ist aufgrund der massiven Ausbildung vor allem des Mantelbereichs die Abgasanlage dementsprechend schlecht isoliert. Die schlechte Isolation führt dabei zu hohen Wärmeverlusten. Ferner führen die schweren Komponenten aufgrund ihrer großen Wärmekapazität besonders im Startbetrieb des Kraftfahrzeugs zu Aufheizproblemen, insbesondere relative lange Aufheizphasen, bei einigen Abgasanlagenkomponenten, wie z. B. einem Oxidations-Katalysator oder anderen in der Abgasanlage angeordneten Katalysatoren. Aufgrund der langsamen Aufheizung solcher Komponenten, die erst ab einer vorbestimmten Betriebstemperatur ihre Funktion aufnehmen, sind vor allem während des Startbetriebs des Kraftfahrzeugs die Abgasemissionswerte dementsprechend schlecht oder es müssen aufwändige konstruktive, wie z.B. eine Luftspaltisolierung, und/oder betriebstechnische, wie z.B. eine motorische Heizstrategie, Vorkehrungen getroffen werden, damit die Aufheizung schnell vonstatten geht und die Abgasemissionswerte in einem tolerierbaren Bereich angeordnet sind.

Aus der EP 1 507 072 A2 ist eine Komponente einer Abgasanlage für eine Brennkraftmaschine, insbesondere eines Kraftfahrzeugs, bekannt, die zumindest in Teilbereichen einen selbsttragenden Mantel aufweist, der einen porösen, zellular aufgebauten Schaum aufweist, wobei der Schaum selbsttragend ausgebildet ist, wobei der Mantel eine Schaumstruktur aufweist, die eine Außenschicht aus einem geschlossenporigen Schaum oder aus einem nicht-porösen Rohr, eine innen an die Außenschicht angrenzende Innenschicht aus einem offenporigen Schaum und eine innen an die Innenschicht angrenzende Auskleidungsschicht ebenfalls aus einem offenporigen Schaum aufweist.

Die vorliegende Erfindung beschäftigt sich nun mit dem Problem, für eine Abgasanlage und/oder eine Komponente derselben, sowie einem zugehörigen Herstellungsverfahren eine verbesserte oder zumindest eine alternative Ausführungsform anzugeben, die sich insbesondere durch eine verbesserte Isolierung bei gleichzeitig geringem Gewicht und hoher Stabilität auszeichnet.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine Abgasanlage und/oder eine Komponente einer Abgasanlage in zumindest einem Teilbereich mit einem selbsttragenden Mantel auszustatten, der einen porösen, offen- oder geschlossenporigen, zellulär aufgebauten Schaum aufweist, wobei der Schaum selbsttragend ausgebildet ist. Erfindungsgemäß ist außerdem vorgesehen, dass der offenporige Schaum der Auskleidungsschicht eine kleinere Porengroße aufweist als der offenporige Schaum der Innenschicht.

Durch eine derartige Ausbildung des Mantels einer Abgasanlage und/oder einer Komponente derselben gelingt es, aufgrund der geringen Dichte des Schaums das Gewicht eines derartigen Mantels erheblich zu reduzieren, ohne dass eine Verringerung der Stabilität in Kauf genommen werden muss. Aufgrund des zellularen Aufbaus des Mantels der Abgasanlage und/oder zumindest einer Komponenten derselben in zumindest einem Teilbereich, ist zudem die Isolierung zumindest in diesem Teilbereich deutlich verbessert, da durch die innerhalb der Zellwände eingeschlossenen Hohlräume der geschlossenporige Schaum isolierend wirkt.

Eine Abgasanlage kann mehrere Komponenten aufweisen, wie z. B. einen Abgaskrümmer, der mit den Brennkammern der Brennkraftmaschine fluidisch ver-bunden ist, eine Ladeeinrichtung, ein an die Ladeeinrichtung angeschlossenes Vorrohr, einen Oxidations-Katalysator, einen Diesel-Partikelfilter, ein vorderes Abgasrohr, eine HWL(Harnstoff-Wasser-Lösung)-Dosiereinrichtung, einen SCR (Selektive katalytische Reduktion)-Katalysator, einen NSK (NOX-Speicher-Katalysator), ein Schalldämpfer, ein hinteres Abgasrohr oder dergleichen. Teilbereiche solcher Komponenten oder mehrere solche Komponenten sowie Teilbereiche der gesamten Abgasanlage können einen Mantel im Sinne der Erfindung aufweisen.

Dabei ist unter einem Mantel eine den jeweiligen Teilbereich in Umfangsrichtung umgebende Hülle zu verstehen. Somit kann unter einem Mantel auch zumindest ein Teilbereich eines Gehäuses oder z. B. das Abgasrohr selbst verstanden werden. Des Weiteren kann ein solcher Mantel auch durch ein Rohrsystem wie z. B. dem Abgaskrümmer ausgebildet werden. Ebenso kann zusätzlich beispielsweise ein Gehäuse z. B. eines Katalysators von einem derartigen Mantel zumindest teilweise umhüllt sein. Dabei ist ein derartiger Mantel selbsttragend ausgebildet.

Ein Mantel im Sinne der Erfindung weist einen geschlossenporigen, porösen, zellularen Schaum auf, der selbsttragende Eigenschaften aufweist. Alternativ könnte der Mantel auch einen offenporigen Schaum mit geschlossener Innenseite und/oder Außenseite aufweisen.

Unter dem Begriff Porosität bzw. porös ist eine physikalische Größe zu verstehen, die das Verhältnis von Hohlraumvolumen zum Gesamtvolumen eines Stoffes darstellt. Nach dieser Definition ist ein Material porös, wenn es ein Hohlraumvolumen aufweist. Würde ein solches poröses Material zusammengepresst werden, so würde aufgrund der zumindest teilweisen Zerstörung des Hohlraumvolumens das zusammengepresste Material ein geringeres Volumen aufweisen. Demzufolge weisen poröse Materialien eine geringere Dichte auf als nicht poröse Materialien mit gleicher stofflicher Zusammensetzung. Somit ist die Porosität dreidimensional zu verstehen.

Dabei versteht man unter geschlossen porös einen zellularen Aufbau. Es sind in diesem Fall die einzelnen Hohlraumvolumina von Zellwänden umschlossen und zueinander separiert. In der Regel kann somit kein Materieaustausch zwischen den einzelnen Hohlraumvolumina stattfinden, es sein denn die Materie diffundiert durch die Zellwände. Im Gegensatz dazu ist bei einem offen porösen Material das Hohlraumvolumen untereinander zumindest teilweise verbunden, sodass in ein offen poröses Material Fluide eindringen können. Somit ist im Gegensatz zu dem geschlossen porösen Material das offen poröse Material nicht fluiddicht.

Im Gegensatz werden die Begriffe offenporig und geschlossenporig nur hinsichtlich der Oberfläche von Materialien verwendet. Dabei versteht man unter offenporig das Auftreten von Poren bzw. von kleinen Öffnungen in bzw. auf der Oberfläche, während geschlossenporige Materialien keinerlei Poren aufweisen. Offenporige Oberflächen sind fluiddurchlässig und geschlossenporige Oberflächen sind fluiddicht, wobei die Porengröße die Dichtigkeit gegenüber bestimmten Fluiden und die Durchlässigkeit für andere Fluide bestimmt. Demzufolge kann man mit guter Näherung den Begriff der Porigkeit als ein zweidimensionales Phänomen einordnen, da es nur die Oberfläche von Materialien betrifft.

Ist nun ein Mantel zumindest in Teilbereichen aus einem porösen, geschlossenporigen, zellular aufgebauten Schaum aufgebaut, dann ist das von dem Mantel umgebene Volumen hinreichend fluiddicht verschlossen und durch die poröse Struktur des Mantels kann zusätzlich erheblich an Gewicht und Material eingespart werden.

Unter selbsttragend bzw. selbsttragenden Eigenschaften ist eine gewisse Stabilität des Mantels bzw. des Schaums zu verstehen, sodass der Mantel bzw. der Schaum ohne zusätzliche stützende und tragende Bauteile, wie z.B. ein Rohr, auskommt und somit direkt mit dem Kraftfahrzeug verbunden werden kann. Demzufolge ist der Mantel bzw. Schaum derart stabil ausgebildet, dass er den üblichen Gebrauchsbelastungen in Einbaulage mit dem Kraftfahrzeug standhält und nicht durch zusätzliche tragende Bauteile verstärkt werden muss. Dabei übernimmt, z. B. bei einer Rohr-/Schaum-Bauweise, der Schaum zumindest einen Teil der tragenden Funktion des in Rohr-/Schaum-Bauweise ausgebildeten Mantels. Ein selbsttragender Schaum muss demzufolge nicht vollständig die an dem Mantel angreifenden Kräfte abfangen, sondern er kann auch nur einen Teil der tragenden Funktion des gesamten Mantelsystems übernehmen.

Dabei kommen die Stabilität des Schaums bzw. seine tragenden Eigenschaften durch eine Selbstabstützung der Zellwände aneinander zustande. Neben dieser Selbstabstützung der Zellwände aneinander können in dem Schaum zusätzlich fachwerkartige und/oder netzartige Strukturen ausgebildet sein, die ebenfalls aufgrund der Selbstabstützung aneinander zur Stabilität des Schaums und seiner selbsttragenden Eigenschaften beitragen können. Diese fachwerkartigen und/oder netzartigen Strukturen können gezielt bei der Herstellung des Schaums ausgebildet werden, sodass die gewünschte Stabilität des Schaums schon während der Herstellung steuerbar ist.

Vorteilhaft ist ein Mantel, der einen derartigen Schaum aufweist, fluiddicht gegenüber den in der Abgasanlage strömenden Fluide ausgebildet und aufgrund des porösen Aufbaus des Schaums weist ein derartiger Mantel ein geringes Gewicht auf. Zudem kann aufgrund der porösen Bauweise des Schaums Material eingespart werden und zudem ist bei dementsprechender Ausbildung des Schaums die Stabilität im Vergleich zu einem Mantel in massiver Bauweise erhöht. Des Weiteren ist wie schon vorhergehend erörtert, vorteilhaft der Mantel durch einen derartigen Schaum gegenüber Wärmeaustritt aus dem Abgas in die Umgebung isoliert.

In einer bevorzugten Ausführungsform können/kann die Außenoberfläche und/oder die Innenoberfläche eines Teilbereichs des Schaums einen nichtporösen Außenoberflächenbereich und/oder einen nichtporösen Innenoberflächenbereich aufweisen. Diese nichtporösen Oberflächenbereiche kann man sich in Art einer Haut vorstellen, die in diesem Fall ebenfalls geschlossenporig ausgebildet ist. Dabei ist demzufolge die Haut bzw. der nichtporöse Oberflächenbereich massiv ausgebildet. Ein solcher nichtporöser Oberflächenbereich ist somit im Vergleich zu dem Schaum aus verdichtetem Material hergestellt.

Demzufolge kann auch der Mantel zumindest im Bereich des Schaums zumindest teilweise einen nichtporösen Außenoberflächenbereich und/oder einen nichtporösen Innenoberflächenbereich aufweisen, je nach dem, wo der Schaum am Mantel angeordnet ist. Der Schaum kann außenseitig und/oder innenseitig angeordnet sein, wobei in diesem Fall der Schaum aufgrund seiner selbsttragenden Eigenschaften zur Stabilität des Mantels beiträgt. Besonders bevorzugt ist der Mantel zumindest in einem Teilbereich vollständig aus dem Schaum ausgebildet.

Bevorzugt sind/ist der nichtporöse Außenoberflächenbereich und/oder der nichtporöse Innenoberflächenbereich jeweils auf dem Schaum angeordnet.

Weist der Schaum nun einen derartigen nichtporösen, geschlossenporigen Oberflächenbereich auf, so ist die Dichtheit des Mantels gegenüber Gasaustritt aus der Abgasanlage vorteilhaft verbessert. Dadurch ist ebenfalls der Druckverlust innerhalb der Abgasanlage zumindest verringerbar, was darauf zurückzuführen ist, dass die geschlossenporige Innenhaut vergleichsweise glatt ist und somit eine reduzierte Rauhigkeit aufweist, was die Strömungsreibung an der Wand reduziert und letztlich den Strömungswiderstand und dementsprechend den Druckverlust reduziert. Außerdem ist aufgrund der geschlossenen Ausbildung des jeweiligen Oberflächenbereichs der Schaum in diesem Bereich gegenüber Versottung geschützt, da in den Schaum Fluide, wenn überhaupt, dann nur über die Diffusion eindringen können. Durch einen derartigen nichtporösen, geschlossenporigen Oberflächenbereich kann diese Diffusion zumindest verringert werden. Zudem ist bei einem derartigen nichtporösen Außenoberflächenbereich ein einfacheres Handling aufgrund der geschlossenen, stabileren Oberfläche möglich und es kann das Eindringen von Wasser, insbesondere von Salzwasser, in die Abgasanlage im Bereich des Schaums verhindert werden. Bei einer derartigen Ausbildung eines nichtporösen Innenoberflächenbereichs ist zudem die Aufnahme von Kondensationswasser aus dem Abgas, das in der Regel sehr starke korrodierende Eigenschaften aufweist, deutlich reduzierbar und ggf. sogar verhinderbar, sodass eine damit einhergehende Korrosion der Abgasanlage deutlich verringert werden kann.

Dabei ist unter innenseitig bzw. Innen- der Oberflächenbereich zu verstehen, der das Innenvolumen der Abgasanlage begrenzt, während unter außenseitig bzw. Außen- derjenige Oberflächenbereich bezeichnet wird, der die Abgasanlage gegenüber die Umgebung abgrenzt.

Im Falle der Ausbildung eines nichtporösen, geschlossenporigen Oberflächenbereiches als Haut beträgt die Dicke der Haut bevorzugt das 1- bis 20-fache einer mittleren Zellwandstärke, besonders bevorzugt das 1- bis 10-fache und ganz besonders bevorzugt das 1- bis 5-fache.

Ein derartiger nichtporöser, geschlossenporiger Oberflächenbereich kann auch durch ein Rohr ausgebildet werden. Dabei ist innen und/oder außen an dem Schaum ein Rohr angeordnet. Ist ein Innenrohr vorgesehen, so kann eine Schaumrohmasse durch ein Spritzgussverfahren auf das Innenrohr aufgespritzt werden und durch nachträgliches Anbacken ausgeformt werden.

Im Falle des Vorhandenseins eines Außenrohrs kann z. B. ebenfalls mit einem Spritzgussverfahren die Schaumrohmasse auf der Innenseite des Außenrohres aufgespritzt werden und nachfolgend eingebacken werden. In diesem Fall ist es ebenfalls möglich, die Schaumrohmasse in das Außenrohr einfließen zu lassen und dieselbe durch Rotation des Außenrohrs innenseitig am Außenrohr gleichmäßig radial zu verteilen. Auch in diesem Fall kann die Schaumrohmasse durch nachfolgendes Einbacken mit dem Außenrohr verbunden werden.

In einer bevorzugten Ausführungsform wird sowohl ein Innen- und ein Außenrohr verwendet, wobei nach Positionieren und Fixieren des Innenrohrs in dem Außenrohr die Schaumrohmasse in den zwischen dem Innen- und dem Außenrohr ausgebildeten Zwischenraum eingefüllt werden kann. Durch nachträgliches Ausbacken kann in dem Zwischenraum zwischen Innen- und Außenrohr der Schaum ausgebildet werden.

Bevorzugt beträgt die radiale Dicke des Innen- und/oder Außenrohrs 0,01% bis 20% der radialen Dicke des gesamten Mantels. Besonders bevorzugt beträgt die radiale Dicke des Innen- und /oder Außenrohrs 0,01 % bis 1 % der radialen Dicke des gesamten Mantels und ganz besonders bevorzugt beträgt die radiale Dicke des Innen- und/oder Außenrohrs 0,01 % bis 0,5% der radialen Dicke des gesamten Mantels.

Dabei ist unter der radialen Dicke des Mantels bzw. des Außen- und/oder Innenrohrs die radial messbare Materialstärke des Mantels und/oder des Innen-und/oder Außenrohrs und/oder des Schaums zu verstehen.

Wird kein Innen- und/oder Außenrohr verwendet, kann ein derartiger nichtporöser Außenoberflächenbereich und/oder nichtporöser Innenoberflächenbereich durch Ausbacken einer Schaumrohmasse in einem Formwerkzeug vorgenommen werden. Ggf. kann dabei das Formwerkzeug etwas über den Schmelzpunkt des Schaums hinaus erhitzt werden. Durch ein derartiges Ausschäumen in einem Formwerkzeug kann die poröse, zellulare Struktur des Schaums in dem Hohlraum des Formwerkzeuges ausgebildet werden. Da in diesem Fall der sich bildende Schaum an den Wänden des Formwerkzeuges anliegt, kann durch dementsprechende Prozesssteuerung ein nichtporöser und/oder geschlossenporiger Innen- und/oder Außenoberflächenbereich hergestellt werden.

Es ist allerdings auch möglich, durch nachträgliches Umformen, wie z. B. durch Verpressen, ggf. unter starker kurzfristiger, partieller oberflächlicher Erhitzung des Formwerkzeuges den nichtporösen und/oder geschlossenporigen Oberflächenbereich auszubilden und/oder zu verstärken.

In einer bevorzugten Ausführungsform beträgt die radiale Dicke des jeweiligen nichtporösen und/oder geschlossenen Oberflächenbereichs 0,01% bis 2% der radialen Dicke des Gesamtmantels. Besonders bevorzugt beträgt die radiale Dicke des dementsprechenden nichtporösen und/oder geschlossenporigen Oberflächenbereichs 0,01% bis 1% und ganz besonders bevorzugt 0,01% bis 0,02% der radialen Dicke des Gesamtmantels.

In einer besonders bevorzugten Ausführungsform ist der Teilbereich einer Abgasanlage und/oder einer Komponente einer Abgasanlage als integral durchgängiges Bauteil ausgebildet. Vorteilhaft an einer derartigen Ausbildung ist die Möglichkeit, das jeweilige integral durchgängige Bauteil in einem Arbeitsschritt auszubilden. Zudem ist aufgrund des einfachen Aufbaus die Herstellung vereinfacht und kostengünstig.

Bevorzugt wird als Material für den Schaum ein Metall oder eine Metalllegierung verwendet. Besonders bevorzugt sind dabei Aluminium und Aluminiumlegierungen sowie Eisen und/oder Stahl sowie Eisen- und/oder Stahllegierungen. Besonders bevorzugt ist der Schaum aus Edelstahl hergestellt und/oder weist zumindest in Teilbereichen Edelstahl auf.

Ebenfalls denkbar sind Schäume aus mineralischen Materialien, wie Tone, Keramiken oder dergleichen.

Ebenfalls bevorzugt ist ein Materialmix in Sandwichbauweise, wobei der Schaum selbst in diesem Fall aus radial unterschiedlichen Schichten aufgebaut sein kann. Bevorzugt ist dabei die innenseitige Schicht, also der innenseitig angeordnete Schaum oder der nichtporöse und/oder geschlossenporige Innenoberflächenbereich, aus einer Edelstahllegierung ausgebildet. Dies hat den Vorteil, dass der Mantel aufgrund der Korrosionsbeständigkeit der Edelstahllegierung nun mehr innenseitig ebenfalls korrosionsbeständig ausgebildet ist.

Eine mittlere Schaumschicht ist bevorzugt aus Aluminium oder einer Aluminiumlegierung ausgebaut.

Eine außenseitige Schaumschicht oder der nichtporöse und/oder geschlossenporige Außenoberflächenbereich kann dabei ebenfalls aus einer Aluminiumlegierung aufgebaut sein oder bevorzugt aus einer Edelstahllegierung, wodurch auch der außenseitige Mantel korrosionsbeständiger wird. Im Falle der Verwendung einer innenseitigen und außenseitigen Edelstahllegierung, können die Edelstahllegierungen eine unterschiedliche Zusammensetzung aufweisen.

Es sind aber auch andere Materialverpaarungen denkbar, wobei auch mineralische Materialien bzw. Schäume zum Einsatz kommen können. Diese mineralischen Schäume sind dann bevorzugt zwischen einem Innen- und einem Außenrohr angeordnet.

Besonders bevorzugt werden diejenigen Schaumbereiche hinsichtlich der Dicke und/oder Dichte verstärkt ausgebildet, die erhöhten Beanspruchungen und Kräften ausgesetzt sind. So ist es z. B. denkbar, eine Biegung des Mantels mit einem Schaum erhöhterer Dicke und/oder Dichte im Vergleich zum übrigen Rohrverlauf auszustatten. Aufgrund dessen ist ein solcher, stärker beanspruchter Bereich, gegenüber Beschädigungen oder Materialermüdungen resistenter ausgeformt. Es kann in diesem Bereich auch eine andere Materialzusammensetzung im Vergleich zu dem übrigen Bereich niederer Beanspruchung eingesetzt werden.

Somit weist in diesem Fall das Material des Mantels in zumindest zwei Bereichen eine unterschiedliche Dichte und/oder ein unterschiedliches Material und/oder eine unterschiedliche Wandstärke auf. Solche unterschiedlichen Dicken, Dichten und/oder Materialien können z. B. mit Hilfe des Spritzgussverfahrens prozessual einfach hergestellt werden.

Des Weiteren können in dem Schaum Anbindungselemente, wie z. B. Flansche, Schweißborden, Halterungen oder dergleichen eingebunden sein. Solche Anbindungselemente können mit ihrem Kopplungsabschnitt in dem Schaum versenkt mit demselben fest verbunden sein. Dabei kann während der Herstellung des Schaums dieser Kopplungsbereich in die Schaumrohmasse eingesetzt werden, sodass nach dem Ausbacken des Schaums dieser Kopplungsbereich mit dem Schaum formschlüssig und/oder stoffschlüssig und/oder kraftschlüssig verbunden ist.

Bevorzugt ist der Kopplungsbereich mit einer Oberflächenkontur ausgestattet, die ein einfaches Ablösen des Kopplungsbereichs aus dem Schaum verhindert. Denkbar wäre die Ausbildung von Haken, Hülsen, Wellen, Zacken, Löchern oder Verdrillungen in dem Kopplungsbereich, sodass unter anderem auch aufgrund der vergrößerten Oberfläche eine stärkere Verbindung zwischen Kopplungsbereich und Schaum auftritt.

Des Weiteren ist ebenfalls bevorzugt innenseitig am Mantel ein offenporiger Innenoberflächenbereich vorzusehen. Ein derartiger offenporiger Innenoberflächenbereich kann sich vorteilhaft bzgl. der Akustik der Abgasanlage auswirken, da bei dementsprechender Ausgestaltung der offenporige Oberflächenbereich eine Schallabsorption aufweisen kann.

Ebenfalls akustikverbessernd kann vorteilhaft innenseitig ein offen poröser Schaum angeordnet sein. Dabei kann ein derartiger offen poröser Schaum integral und aus dem gleichen Material wie der geschlossenporige Schaum ausgebildet sein, oder als separater Schaum aus einem anderen Material in einem separaten Aufschäumprozess auf den geschlossen porösen Schaum aufgetragen sein. Im Falle einer integralen Ausbildung des offen porösen mit dem geschlossen porösen Schaum lässt sich eine derartige Ausbildung eines innenseitigen Schaums durch dementsprechend eingestellte Prozessparameter sowohl während des Auftragens der Schaumrohmasse als auch während des Ausbackens ausbilden.

Verfahrenstechnisch kann dies z. B. durch eine unterschiedliche Konzentration des Treibmittels in der Schaumrohmasse bewerkstelligt werden. So lässt sich insbesondere im Falle eines Spritzgussverfahrens die Menge an zugesetztem Treibmittel in der Schaumrohmasse schichtweise kontrollieren. Demzufolge kann unter anderem durch die Variation der Konzentration des Treibmittels in der Schaumrohmasse eine unterschiedliche radiale und/oder axiale Dicke des Schaums und/oder eine unterschiedliche Dichte, angefangen von hochporösen über niederporöse bis hin zu nichtporösen Teilbereichen, in dem Schaum ausgebildet werden. Dabei ist es auch denkbar, dass im Falle der nichtporösen und/oder geschlossenporigen Oberflächenbereiche das Treibmittel gänzlich weggelassen wird, sodass sich eben dieser gewünschte nichtporöse und/oder geschlossenporige Oberflächenbereich innen- und/oder außenseitig ausbildet.

Aufgrund unter anderem einer geschickten Variation der Konzentration des Treibmittels hat man eine höhere Flexibilität in der Gestaltung eines Mantels mit einem derartigen Schaum. Wird zudem in diesem Fall das Spritzgussverfahren verwendet, so sind die unterschiedlichsten Ausbildungsformen eines Mantels möglich.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1a,b: einen Schaum mit einem in den Schaum eingesetzten Flansch, bei verschiedenen Ausführungsformen,
- Fig. 2a: einen Schaum mit darin eingesetzter und integral damit ausgebildeten Halterung,
- Fig. 2b: die Halterung zum Einsetzen und Integrieren in den Schaum,
- Fig. 3: eine Verstärkung des Schaums in einem stärker belasteten Bereich,
- Fig. 4a-c: eine innenseitig offen poröse und außenseitig geschlossene Struktur, bei verschiedenen Ausführungsformen.

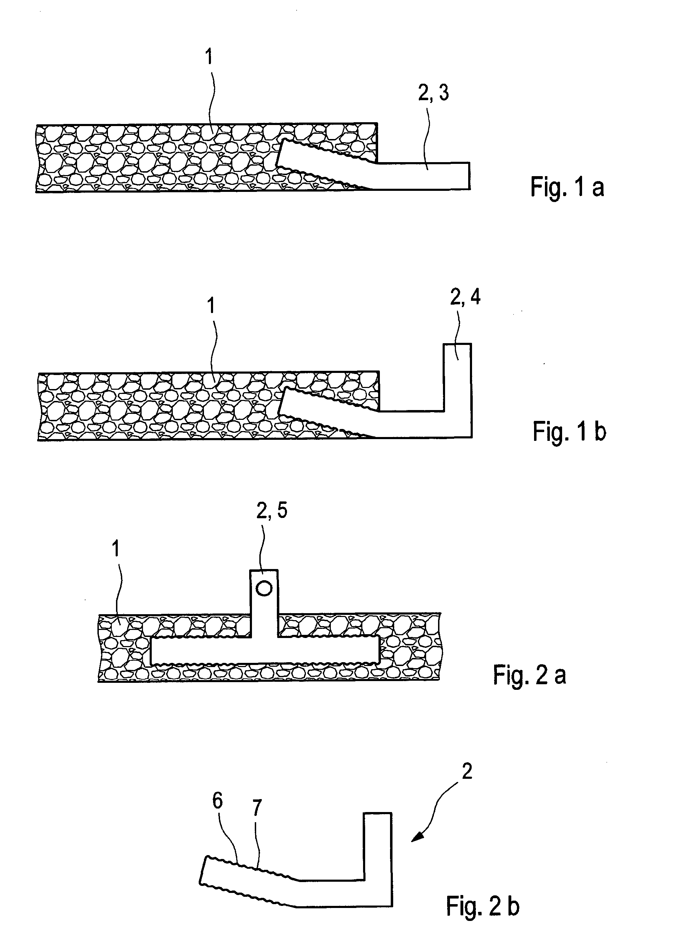

Wie in Fig. 1a dargestellt, kann in einen Schaum 1 ein Anbindungselement 2 eingelassen sein. Dabei kann das Anbindungselement 2 als Schweißborde 3 oder wie in Fig. 1b dargestellt, als Schweißflansch 4 ausgebildet sein.

Ebenso ist es denkbar, wie in Fig. 2a gezeigt, den Schaum 1 mit einer in denselben eingelassenen Halterung 5 als Anbindungselement 2 zu versehen. Bevorzugt ist dabei der Kopplungsbereich 6 des Anbindungselementes 2 mit einer Oberflächenkontur 7 ausgestattet. Diese Oberflächenkontur kann, wie in Fig. 2b dargestellt, als eine Art Wellenform ausgebildet sein, es können aber auch an dem Kopplungsbereich 6 Haken, Ösen, Abzweigungen oder dergleichen ausgebildet sein.

Bevorzugt ist der Kopplungsbereich 6 mit dem restlichen Anbindungselement aus demselben Material ausgebildet. Besonders bevorzugt ist zumindest die Oberfläche des Kopplungsbereiches 6 offenporig ausgebildet und ganz besonders bevorzugt ist der Kopplungsbereich 6 offenporig und zumindest teilweise offen porös ausgebildet.

Durch eine derartige offenporige bzw. offen poröse Ausbildung ist ein Eindringen des Schaums in den Kopplungsbereich 6 ermöglicht, wodurch eine stabilere Anbindung des Kopplungsbereichs an den Schaum 1 gelingt. Dies ist ebenfalls im Falle von Ösen gegeben.

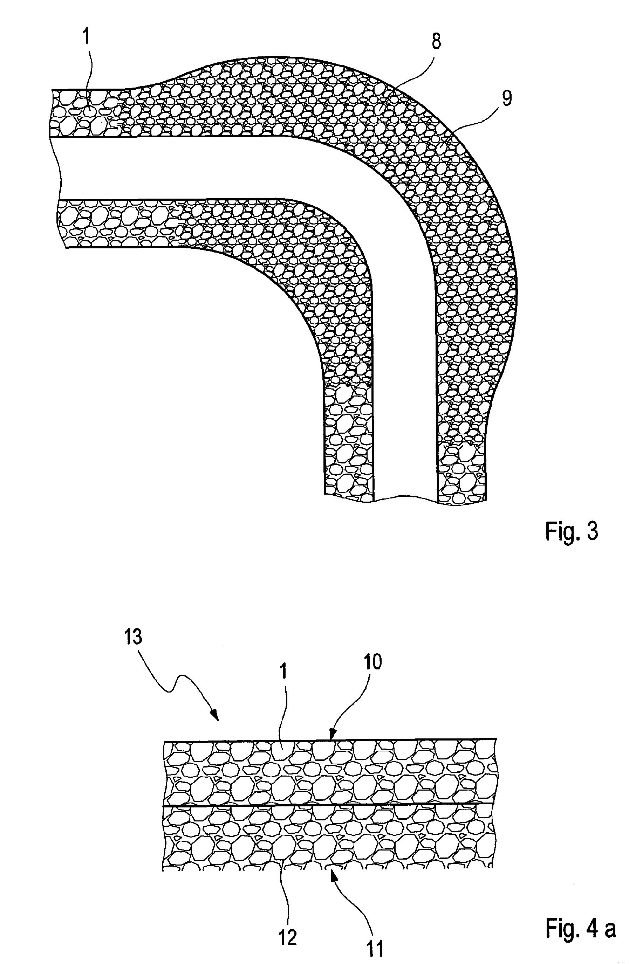

Wie in Fig. 3 gezeigt, ist der Schaum 1 bevorzugt in einem stärker belasteten Bereich 8, wie in diesem Fall an einer Biegung, mit einer Verstärkung 9 ausgestattet. Diese Verstärkung 9 kann eine Verstärkung der radialen Dicke des Materials darstellen oder es ist auch denkbar, dass in diesem Bereich weniger Treibmittel der Schaumrohmasse beigemischt wird, sodass der Anteil an Nichttreibmittel in diesem stark belasteten Bereich höher ist und somit zu einer erhöhten Stabilität des Bereiches beiträgt. Demzufolge wird nach dem Ausbacken der Schaumrohmasse die Verstärkung 9 eine höhere Dichte aufweisen. Besonders bevorzugt weist in einem solchen, stärker belasteten Bereich 8 die Verstärkung 9 eine höhere radiale Dicke und/oder Dichte auf.

In Fig. 4a ist eine zweischichtige Schaumstruktur 13 dargestellt, die außen eine Außenschicht 10 aus einem geschlossen porösen Schaum 1 und innen eine Innenschicht 11 aus einem offen porösen Schaum 12 aufweist. Durch eine derartige Materialverpaarung kann mittels Schalldämpfung durch den innenseitig angeordneten offen porösen Schaum 12 eine verbesserten Akustik einer Abgasanlage erreicht werden. Die geschlossenporige Außenschicht 10 sorgt für die erforderliche Gasdichtigkeit und erfüllt eine Tragfunktion für die offenporige Innenschicht 11.

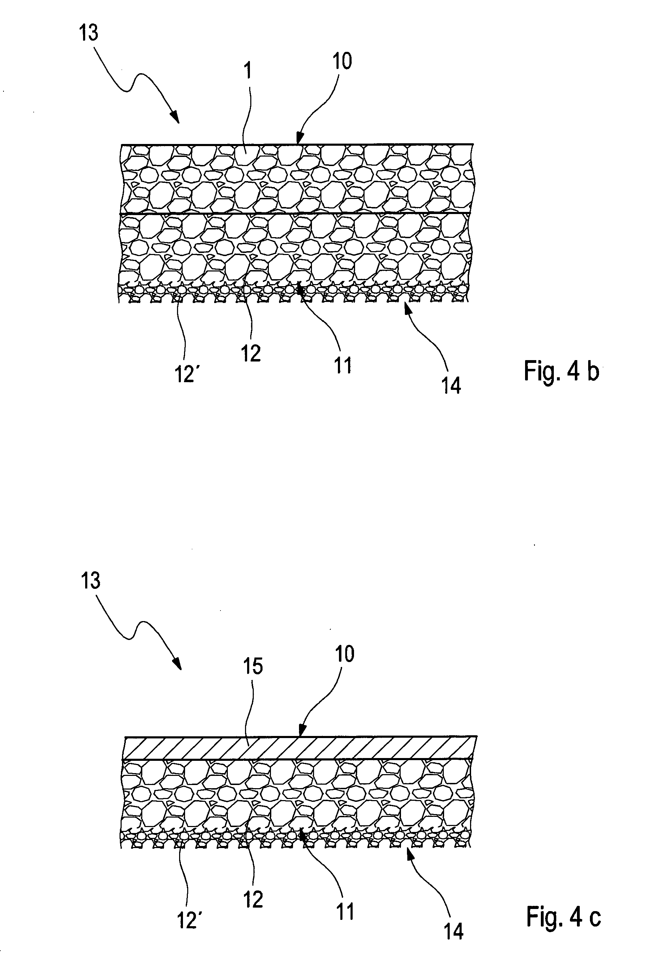

Die Innenseite ist der Abgasströmung ausgesetzt. Um an der offenporigen Innenseite die Reibung bzw. den Strömungswiderstand zu reduzieren, kann es gemäß Fig. 4b und 4c zweckmäßig sein, eine dreischichtige Schaumstruktur 13 vorzusehen. Bei der Variante der Fig. 4b ist die Außenschicht 10 wieder aus einem geschlossenporigen Schaum 1 hergestellt und die aus einem offenporigen Schaum 12 hergestellte Innenschicht 11 ist an ihrer Innenseite mit einer weiteren Schicht 14 versehen, die im Folgenden als Auskleidungsschicht 14 bezeichnet wird. Die Auskleidungsschicht 14 ist ebenfalls aus einem offenporigen Schaum 12' hergestellt, der jedoch eine kleinere Porengröße aufweist als der offenporige Schaum 12 der Innenschicht 11. Die Auskleidungsschicht 14 besitzt somit einen reduzierten Strömungswiderstand und ist für Luftschall durchlässig, auf dessen Bedämpfung die dahinterliegende Innenschicht 11 hinsichtlich der Porengröße ihres Schaums 12 ausgelegt ist.

Bei der Variante der Fig. 4c ist die Außenschicht 10 durch ein massives, also nicht geschäumtes Rohr 15 gebildet. Die Innenschicht 11 besteht aus dem offenporigen Schaum 12 mit größerer Porengröße. Die Auskleidungsschicht 14 besteht aus dem offenporigen Schaum 12' mit der kleineren Poregröße. Bei gleicher Tragfunktion wie der geschlossenporige Schaum 1 besitzt das Rohr 15 eine deutlich reduzierte Wandstärke, wodurch die durch die Schaumstruktur 13 gebildete Wand bei gleicher Tragkraft eine reduzierte Wandstärke aufweist.

Es ist klar, dass die geschichtete Schaumstruktur 13 auch mehr als drei Schichten aufweisen kann.

## Patentansprüche

1. Komponente einer Abgasanlage für eine Brennkraftmaschine, insbesondere eines Kraftfahrzeugs, die zumindest in Teilbereichen einen selbsttragenden Mantel aufweist, der einen porösen, zellular aufgebauten Schaum (1) aufweist, wobei der Schaum (1) selbsttragend ausgebildet ist, wobei der Mantel eine Schaumstruktur (13) aufweist, die eine Außenschicht (10) aus einem geschlossenporigen Schaum (1) oder aus einem nicht-porösen Rohr (15), eine innen an die Außenschicht (10) angrenzende Innenschicht (11) aus einem offenporigen Schaum (12) und eine innen an die Innenschicht (11) angrenzende Auskleidungsschicht (14) ebenfalls aus einem offenporigen Schaum (12') aufweist,
**dadurch gekennzeichnet,**
**dass** der offenporige Schaum (12') der Auskleidungsschicht (14) eine kleinere Porengroße aufweist als der offenporige Schaum (12) der Innenschicht (11).

2. Komponente nach Anspruch 1,
**dadurch gekennzeichnet, dass**
die Auskleidungsschicht (14) aus einer Edelstahllegierung hergestellt ist, während die Innenschicht (11) aus Aluminium oder aus einer Aluminiumlegierung hergestellt ist.

3. Komponente nach Anspruch 1 oder 2,
**dadurch gekennzeichnet, dass**
die Schaumstruktur (13) auf den Außenoberflächenbereich aufgebacken ist.

4. Komponente nach einem der Ansprüche 1 bis 3,
**dadurch gekennzeichnet, dass**
die Außenschicht (10) aus einer Edelstahllegierung hergestellt ist.

5. Komponente nach einem oder mehreren der vorhergehenden Ansprüche, **dadurch gekennzeichnet,**
**dass** der Schaum (1) aus Metall und/oder aus einem mineralischen Material besteht und/oder dass das Material des Mantels in zumindest zwei Bereichen eine unterschiedliche Dichte und/oder ein unterschiedliches Material und/oder eine unterschiedliche Wandstärke aufweist.

6. Komponente nach einem oder mehreren der vorhergehenden Ansprüche, **dadurch gekennzeichnet, dass**
der Mantel zumindest ein Anbindungselement (2, 3, 4, 5) aufweist, das integral mit demselben ausgebildet ist.

7. Abgasanlage mit zumindest einer Komponente nach einem oder mehreren der vorhergehenden Ansprüche.

8. Verfahren zur Herstellung einer Komponente einer Abgasanlage nach einem der vorhergehenden Ansprüche,
bei dem ein Mantel der Komponente durch Ausbacken einer Schaumrohmasse hergestellt wird, wobei der Schaumrohmasse in zumindest zwei Bereichen des zukünftigen Mantels ein Treibmittel in unterschiedlicher Konzentration beigemischt wird, so dass der Mantel in zumindest diesen zwei Bereichen nach dem Ausbacken eine unterschiedliche Dichte und/oder eine unterschiedliche Materialstärke aufweist.

## Claims

1. A component of an exhaust system for an internal combustion engine, in particular of a motor vehicle, which at least in part regions comprises a self-supporting jacket, which comprises a porous, cellularly-structured foam (1), wherein the foam (1) is designed self-supportingly, wherein the jacket comprises a foam structure (13), which comprises an outer layer (10) of a closed-pore foam (1) or of a non-porous pipe (15), an inner layer (11) of an open-pore foam (12) adjoining the outer layer (10) on the inside and a lining layer (14) adjoining the inner layer (11) on the inside likewise of an open-pore foam (12'), **characterized in that** the open-pore foam (12') of the lining layer (14) has a smaller pore size than the open-pore foam (12) of the inner layer (11).

2. The component according to Claim 1, **characterized in that** the lining layer (14) is produced from a stainless steel alloy, while the inner layer (11) is produced from aluminium or from an aluminium alloy.

3. The component according to Claim 1 or 2, **characterized in that** the foam structure (13) is baked onto the outer surface region.

4. The component according to any one of the Claims 1 to 3, **characterized in that** the outer layer (10) is produced from a stainless steel alloy.

5. The component according to any one or multiple of the preceding claims, **characterized in that** the foam (1) consists of metal and/or of a mineral material and/or in that the material of the jacket in at least two regions has a different thickness and/or a different material and/or a different wall thickness.

6. The component according to any one or multiple of the preceding claims, **characterized in that** the jacket comprises at least one connecting element (2, 3, 4, 5), which is integrally formed with the same.

7. An exhaust system having at least one component according to any one or multiple of the preceding claims.

8. A method for producing a component of an exhaust system according to any one of the preceding claims, in which a jacket of the component is produced through baking of a raw foam compound, wherein a blowing agent in different concentration is admixed to the raw foam compound in at least two regions of the future jacket, so that the jacket in at least these two regions following the baking has a different density and/or a different material thickness.

## Revendications

1. Composants d'une installation de gaz d'échappement pour un moteur à combustion interne, notamment d'un véhicule automobile, qui présente au moins dans des zones partielles une gaine autoporteuse, qui présente une mousse (1) poreuse, de structure cellulaire, dans lesquels la mousse (1) est conçue de manière autoporteuse, dans lesquels la gaine présente une structure e mousse (13), qui présente une couche extérieure (10) constituée d'une mousse (1) à pores fermés ou d'un tuyau (15) non poreux, une couche intérieure (11) adj acente à la couche extérieure (10) constituée d'une mousse (12) à pores ouverts et une couche de revêtement (14) adjacente à la couche intérieure (11), également constituée d'une mousse à pores ouverts (12'), **caractérisés en ce que** la mousse à pores ouverts (12') de la couche de revêtement (14) présente une plus petite taille de pores que la mousse à pores ouverts (12) de la couche intérieure (11).

2. Composants selon la revendication 1, **caractérisés en ce que** la couche de revêtement (14) est fabriquée dans un alliage d'acier inoxydable, alors que la couche intérieure (11) est fabriquée en aluminium ou dans un alliage d'aluminium.

3. Composants selon les revendications 1 ou 2, **caractérisés en ce que** la structure de mousse (13) est cuite au four sur la zone de surface extérieure.

4. Composants selon une des revendications 1 à 3, **caractérisés en ce que** la couche extérieure (10) est fabriquée dans un alliage d'acier inoxydable.

5. Composants selon une ou plusieurs des revendications précédentes, **caractérisés en ce que** la mousse (1) est constituée d'un métal et/ou d'un matériau minéral et/ou **en ce que** le matériau de la gaine dans au moins deux zones présente une densité différente et/ou un matériau différent et/ou une épaisseur de paroi différente.

6. Composants selon une ou plusieurs des revendications précédentes, **caractérisés en ce que** la gaine présente au moins un élément de liaison (2,3,4,5), qui est conçu en un seul tenant avec cette dernière.

7. Installation de gaz d'échappement comportant au moins un composant selon une ou plusieurs des revendications précédentes.

8. Procédé de fabrication d'un composant d'une installation de gaz d'échappement selon une des revendications précédentes, dans lequel une gaine des composants est fabriquée par cuisson d'une masse brute de mousse, dans lequel la masse brute de mousse est mélangée dans au moins deux zones de la future gaine avec un agent gonflant en différentes concentrations, de sorte que la gaine dans au moins ces deux zones présente après la cuisson une densité différente et/ou une épaisseur de matériau différente.
